# EUROPEAN PATENT SPECIFICATION

(11) **EP 3 939 733 B1**
(45) Date of publication and mention of the grant of the patent: **22.03.2023**
(21) Application number: 21180868.8
(22) Date of filing: 22.06.2021
(51) Int. Cl.: B23K 9/09, B23K 9/095, B23K 9/173, B23K 9/14, B23K 9/12, B23K 9/06, B23K 103/04

(54) **ARC WELDING METHOD AND ARC WELDING DEVICE**
LICHTBOGENSCHWEISSVERFAHREN UND LICHTBOGENSCHWEISSVORRICHTUNG
PROCÉDÉ ET DISPOSITIF DE SOUDAGE À L'ARC

(30) Priority: 30.06.2020 JP 2020113469
(43) Date of publication of application: 19.01.2022
(73) Proprietor: Daihen Corporation, Osaka-shi, Osaka 532-8512 (JP)
(72) Inventor: BABA, Hayato, OSAKA-SHI, 5328512 (JP)
(74) Representative: Cabinet Beaumont

(56) References cited:
- EP-A1- 3 552 748
- WO-A1-2017/033978
- US-A1- 2014 202 993
- US-B1- 6 534 746

## Description

### [Technical Field]

The present invention relates to a consumable electrode arc welding method and an arc welding device as disclosed in the preamble of claims 1 and 10 (see, for example, EP3552748A1).

### [Background Art]

One of the welding defects arising in arc welding is occurrence of blowholes. The blowholes are spherical cavities in a weld metal caused by solidification of a molten metal with gases having a low boiling point trapped in the molten metal. This is generally often caused by hydrogen, oxygen, nitrogen, etc. In order to prevent these elements in the atmosphere from entering, measures to make a shielding state favorable are taken including increase of a flow of shielding gas and contrivance of the nozzle of a welding torch, for example. Furthermore, the moisture and dirt on a welding base material and a welding wire are also the causes of contamination by these elements, and thus a measure for enhancement of the cleanliness of the base material and the wire is also taken. Moreover, when plasma arc cutting materials are welded, for example, the elements above may be contaminated from a nitride layer formed on the cut surface, and thus a measure for removal of the nitride layer on the cut surface by a grinder is also taken.

As described above, the most common measure for suppressing the occurrence of blowholes is prevention of contamination by the elements as the cause of it. However, in some cases, such a measure cannot be taken. For example, in welding a zinc coated steel plate, it has been known that zinc evaporation having a low boiling point evaporated due to heat input for welding is the cause of blowholes. It is, however, difficult to perform welding by completely removing the zinc coating at the welded part, and thus welding is normally performed with a zinc coating applied. Hence, methods of preventing blowholes in welding of a zinc coated steel plate are described in in the prior arts of Patent Document 1 and Patent Document 2. These are techniques directed to prevent occurrence of blowholes by vibrating a molten metal to thereby promote discharge of the evaporation to the outside the molten metal.

Patent Document 1 discloses a technique for suppressing the occurrence of blowholes by short-circuiting a wire with an object to be welded at a start of welding period or during a period for supplying the base current and by vibrating a molten metal of a molten pool formed on the surface of the zinc coated steel plate.

Patent Document 2 discloses a technique for suppressing the occurrence of blowholes by repeatedly varying the feed speed of a welding wire at several tens of Hz to thereby vibrate a molten metal.

### [Prior Art Document]

### [Patent Document]

[Patent Document 1] Japanese Patent Application Laid-Open No. 2014-069226
[Patent Document 2] Japanese Patent Application Laid-Open No. 2005-219086

### [Summary of Invention]

### [Problems to be Solved by Invention]

As such, methods of suppressing blowholes have already been fully considered in a general arc welding or in a welding of a zinc coated steel plate which is vulnerable to blowholes.

Meanwhile, many new welding processes have recently been proposed, and there is a unique process that easily causes blowholes out of these processes. For example, the inventors of the present application have found that in an consumable electrode arc welding method using a shielding gas containing argon, a great number of blowholes occur when the welding current is set to 350 A to 600 A. The blowholes occurring here are not reduced even if the shielding state is made sufficiently favorable and thus it is considered that the argon in the shielding gas is entrapped in the molten metal.

It is considered that in the welding process using the welding current of 350 A to 600 A, a short circuit sometimes occurs, which causes temporary disturbance of the arc atmosphere and the molten pool to thereby entrap the argon gas in the molten pool. Note that it is also considered that a short circuit rarely occurs, and the arc atmosphere and the molten pool are basically stable and are less vibrated, and thus the entrapped argon gas is difficult to float up on the surface of the molten pool, leading to the occurrence of blowholes. In such a welding process, the molten pool cannot fully be vibrated due to the short circuit, making it unable to suppress the occurrence of blowholes.

Moreover, in the large current welding process with the welding current of 350 A to 600 A, the welding wire needs to be fed at a high speed, and thus varying the feed speed at as high as several tens of Hz is not preferable.

An object of the present disclosure is to provide an arc welding method and an arc welding device that are able to prevent blowholes from occurring at a welding process with an average welding current of 350 A or higher in a consumable electrode arc welding using a shielding gas containing argon.

### [Means for Solving Problems]

An arc welding method is a consumable electrode arc welding method using a shielding gas containing argon and comprises: setting a first welding condition in which a first welding current is supplied to a welding wire; and setting a second welding condition in which a second welding current is supplied to a welding wire. The first welding condition and the second welding condition are welding conditions in which a reference current of the welding current is 350 A or higher and a current variation range is from 50 A to 150 A, and the first welding condition and the second welding condition are switched at a cycle of a frequency ranging from 1 Hz to 5 Hz.

An arc welding device is a consumable electrode arc welding device using a shielding gas containing argon and comprises: a setting circuit that sets a welding condition by switching between a first welding condition in which a first welding current is supplied to a welding wire and a second welding condition in which a second welding current is supplied to a welding wire. The first welding condition and the second welding condition are welding conditions in which a reference current of the welding current is 350 A or higher and a current variation range is from 50 A to 150 A, and the setting circuit switches the first welding condition and the second welding condition at a cycle of a frequency ranging from 1 Hz to 5 Hz.

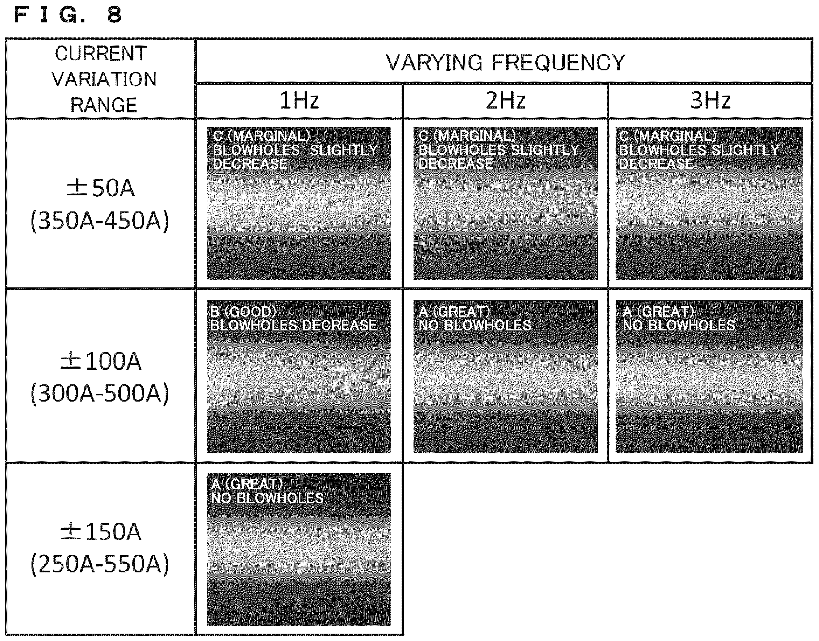

In the present aspect, in the consumable electrode arc welding using a shielding gas containing argon, the first welding condition and the second welding condition periodically vary to thereby vibrate a molten metal and prompt the discharge of air bubbles entrapped in the molten metal, which suppresses the occurrence of the blowholes. Especially, in order to provide the molten metal with vibrations, varying the welding current as described above is effective (see FIG. 8). Hereafter, control of periodically varying the welding current is called current amplitude control.

Preferably, the first welding condition or the second welding condition is a welding condition in which a tip portion of a welding wire (including the molten region, a similar representation is not repeated below) or an arc formation point in a liquid column formed at the tip portion goes into a space surrounded by a concave molten part formed on a base material by an arc.

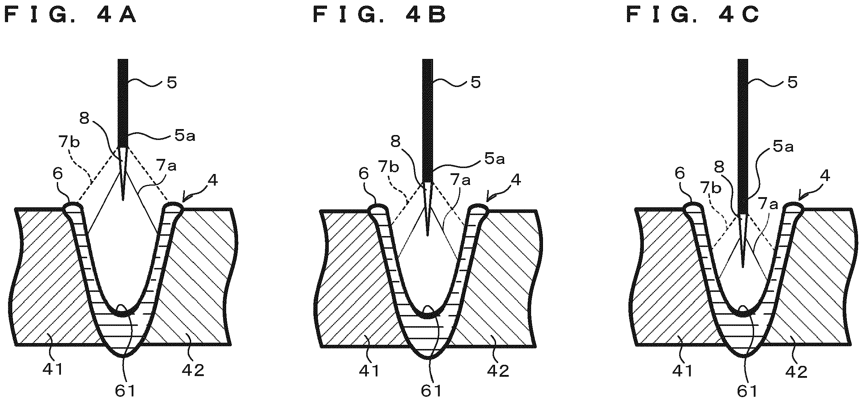

In the present aspect, a tip portion of a welding wire or an arc formation point in a liquid column formed at the tip portion goes into a space surrounded by a concave molten part formed on the base material (see FIG. 4B and FIG.4C). Hereafter, the space surrounded by the concave molten part is called a buried space, and an arc formed between the tip portion of the welding wire going into the buried space or the arc formation point in the liquid column formed at the tip portion and the base material or molten part is appropriately called a buried arc. Furthermore, welding by the buried arc is called buried arc welding. The buried arc welding is achieved by feeding the welding wire at about 5 to 100 m/minute and supplying a large current of 300 A or higher, for example.

Meanwhile, an arc for which the concave molten part is not formed or a normal arc for which a tip portion of a welding wire and an arc formation point do not go into the concave molten part is called a non-buried arc.

In the buried arc welding, a deep molten pool is formed, to cause argon in the shielding gas to remain in the molten metal, which is likely to cause blowholes. In the arc welding method according to the present aspect, deep penetration can be obtained by the buried arc welding while occurrence of blowholes can be prevented.

It is more preferable that the arc welding method further comprises varying a setting voltage to be applied between the welding wire and the base material in a range from 10 Hz to 1000 Hz as well as switching the first welding condition and the second welding condition at a cycle of a frequency ranging from 1 Hz to 5 Hz.

In the present aspect, by varying the setting voltage ranging from 10 Hz to 1000 Hz in the buried arc welding, the molten pool related to the buried arc welding can be stabilized. Though the molten metal related to the buried arc welding may be waved widely, by varying the setting voltage ranging from 10 Hz to 1000 Hz, the molten metal is minutely vibrated at a higher frequency than this waving cycle, which can reduce the large waviness of the molten metal.

Accordingly, the molten pool is stabilized by minute vibrations to thereby suppress the distortion and drips of a bead while the molten pool is slowly and widely vibrated at a cycle of a frequency ranging from 1 Hz to 5 Hz to thereby reduce the occurrence of blowholes.

Preferably, the base material to be welded is stainless steel.

In the present aspect, stainless steel can be welded while suppressing the occurrence of blowholes.

It is more preferable that the arc welding method further comprises making a spray transfer transition for setting a welding condition in which spray transfer is employed.

In the present aspect, the droplet transfer mode can be held in the spray transfer, which can suppress the occurrence of a short circuit and stabilize the welding.

It is preferable that the step of making a spray transfer transition sets the welding condition in which the spray transfer is employed as the droplet transfer mode for a predetermined time period before welding performed by periodically switching the first welding condition and the second welding condition is started.

In the present aspect, before start of welding performed by periodically varying the welding current, the droplet transfer mode can be held in the spray transfer.

It is preferable that the welding condition in which the spray transfer is employed as the droplet transfer mode includes setting voltages higher than a setting voltage under the first condition and a setting voltage under the second condition.

In the present aspect, welding is performed at setting voltages higher than the setting voltages under the first welding condition and the second welding condition, whereby the droplet transfer mode can surely be set to the spray transfer.

Preferably, the first welding condition and the second welding condition include setting voltages that allow the droplet transfer mode to be the spray transfer even if welding current is low.

In the present aspect, the first welding condition and the second welding condition include setting voltages that allow the droplet transfer mode to be the spray transfer even if welding current is low, whereby the droplet transfer mode can be more surely held at the spray transfer.

Preferably, the first welding condition or the second welding condition is a welding condition in which a tip portion of a welding wire or an arc formation point in a liquid column formed at the tip portion goes into a space surrounded by a concave molten part formed on a base material by an arc, and further comprises: welding a layer other than the last layer by periodically switching the first welding condition and the second welding condition using a solid wire in a case where the base material is multi-layer welded; and welding the last layer using a flux-cored wire in a case where the base material is multi-layer welded.

In the present aspect, the buried arc welding using a solid wire enables improvement in the welding efficiency and reduction in a welding cost. Furthermore, welding of the last layer by using a flux-cored wire enables provision of an excellent bead appearance.

### [Effect of Invention]

According to the present disclosure, it is possible to suppress the occurrence of blowholes in a consumable electrode arc welding at an average welding current of 350 A or higher using a shielding gas containing argon.

### [Brief Description of Drawings]

FIG. 1 is a schematic view illustrating one configuration of an arc welding device according to Embodiment 1.
FIG. 2 is a flowchart showing the procedure of an arc welding method according to Embodiment 1.
FIG. 3 is a side cross-sectional view illustrating a base material as a target to be welded.
FIG. 4A illustrates a non-buried arc state.
FIG. 4B illustrates a semi-buried arc state.
FIG. 4C illustrates a fully-buried arc state.
FIG. 5 is a timing chart indicating a switching method for a welding condition according to Embodiment 1.
FIG. 6A is a cross-sectional view schematically illustrating a welded joint.
FIG. 6B is a cross-sectional view schematically illustrating a welded joint.
FIG. 7 is an image showing the result of a radiograph test of a welded joint when current amplitude control according to Embodiment 1 is not performed.
FIG. 8 is an image indicating the result of a radiograph test of a welded joint when the current amplitude control according to Embodiment 1 is performed.
FIG. 9 is a flowchart showing the procedure of an arc welding method according to Embodiment 2.
FIG. 10 is a timing chart showing a switching method for a welding condition according to Embodiment 2.
FIG. 11 is a flowchart showing the procedure of an arc welding method according to Embodiment 3.
FIG. 12 is a timing chart illustrating a switching method for a welding condition according to Embodiment 3.
FIG. 13 is a flowchart showing the procedure of an arc welding method according to Embodiment 4.
FIG. 14A is a timing chart showing a switching method for a welding condition according to Embodiment 4.
FIG. 14B is a timing chart showing a switching method for a welding condition according to Embodiment 4.
FIG. 14C is a timing chart showing a switching method for a welding condition according to Embodiment 4.
FIG. 15 is a flowchart showing the procedure of an arc welding method according to Embodiment 5.

### [Mode for Carrying Out Invention]

Specific examples of an arc welding method and an arc welding device according to embodiments of the present invention will be described with reference to the drawings. Note that the present invention is not limited to these examples. The scope of the present invention is defined by the appended claims.

The present disclosure will be described below with reference to the drawings depicting embodiments thereof.

### Embodiment 1

### <Arc Welding Device>

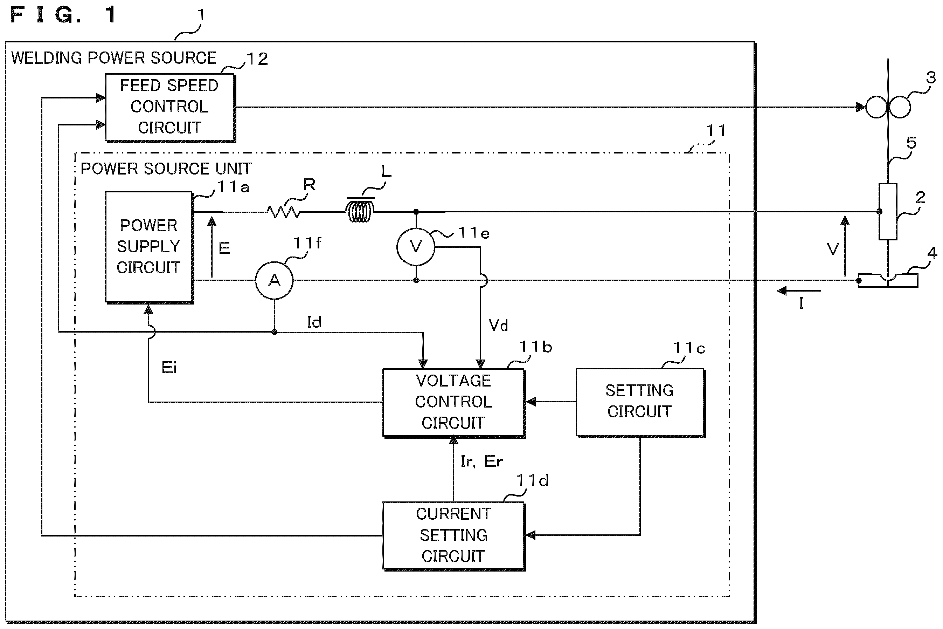

FIG. 1 is a block diagram illustrating one configuration of an arc welding device according to Embodiment 1. The arc welding device according to the present embodiment is a consumable electrode type gas shield arc welding device using a shielding gas containing argon and is provided with a welding power source 1, a torch 2 and a wire feed unit 3. The arc welding device according to the present embodiment can perform both of buried arc welding and non-buried arc welding.

The torch 2 is made of a conducting material such as a copper alloy or the like, and guides a welding wire 5 to a part to be welded of a base material 4 and has a cylindrical contact tip to supply welding current I required for forming an arc 7a, 7b (see FIG. 4A, FIG4B and FIG.4C). The contact tip is in contact with the welding wire 5 inserted therethrough and supplies welding current I to the welding wire 5.
Furthermore, the torch 2 has a hollow cylindrical shape so as to enclose the contact tip and has a nozzle for ejecting a shielding gas to the part to be welded. The shielding gas is to protect the base material 4 and the welding wire 5 that are molten by the arc 7a, 7b from oxidization. The shielding gas is an inert gas, for example, a carbonic acid gas, a mixture of carbonic acid gas and an argon gas, a mixture of oxygen and an argon gas, argon or the like.

The welding wire 5 is, for example, a solid wire having a diameter ranging from 0.9 mm to 1.6 mm and functions as a consumable electrode. The welding wire 5 is a pack wire stored in a pail pack in a spirally wound manner or a reel wire wound around a wire reel.

The wire feed unit 3 is provided with feed rollers for feeding the welding wire 5 to the torch 2 and a motor for rotating the feed rollers. The wire feed unit 3 draws the welding wire 5 from the pail pack or the wire reel by rotating the feed rollers and feeds the drawn welding wire 5 to the torch 2 at a predetermined speed. In the case of the buried arc welding, the feed speed of the welding wire 5 is, for example, about 5 to 100 m/min. In the case of the non-buried arc welding, the feed speed of the welding wire 5 is, for example, about 1 to 22 m/min. Note that such a feed system of the welding wire 5 is mere one example, and any feed system may be employed.

The welding power source 1 includes a power source unit 11 that is connected to the contact tip of the torch 2 and the base material 4 through power supply cables to thereby supply welding current I and a feed speed control circuit 12 that controls the feed speed of the welding wire 5. Note that the power supply unit 11 and the feed speed control circuit 12 may separately be provided. The power supply unit 11 is a power source having a constant-voltage characteristic and includes a power supply circuit 11a for outputting direct current (DC) that is subjected to PWM control, a voltage control circuit 11b, a setting circuit 11c, a current setting circuit 11d, a voltage detection unit 11e and a current detection unit 11f.

The setting circuit 11c is a circuit for making setting by periodically switching a welding condition between a first welding condition and a second welding condition related to the buried arc welding and for outputting a welding condition setting signal indicating the set welding condition to the voltage control circuit 11b and the current setting circuit 11d.

The first welding condition and the second welding condition are conditions in which at least the reference current of the welding current I is equal to or higher than 350 A and that the current variation range is from 50 A to 150A. The reference current of the welding current I is preferably 400 A or higher.

For example, the welding current I of 350 A is employed in the first welding condition and the welding current I of 450 A is employed in the second welding condition (400A±50A).

Alternatively, the welding current I of 300 A is employed in the first welding condition and the welding current of 500 A is employed in the second welding condition (400A±100A).

Alternatively, the welding current I of 250 A is employed in the first welding condition and the welding current I of 550 A is employed in the second welding condition (400A±150A).

The setting circuit 11c switches the welding condition between the first welding condition and the second welding condition at cycles of a frequency ranging from 1 Hz to 5Hz. More preferably, the setting circuit 11c may be configured to switch the welding condition between the first welding condition and the second welding condition at cycles of a frequency ranging from 2 Hz to 3 Hz.

The current setting circuit 11d outputs a current setting signal Ir indicating the set current value of the welding current I to the voltage control circuit 11b and the feed speed control circuit 12.
If the first welding condition is set by the setting circuit 11c, the current setting circuit 11d outputs a current setting signal Ir indicating a low current value to the voltage control circuit 11b and the feed speed control circuit 12. If the second welding condition is set by the setting circuit 11c, the current setting circuit 11d outputs a current setting signal Ir indicating a high current value to the voltage control circuit 11b and the feed speed control circuit 12.
The feed speed control circuit 12 outputs a feed instruction signal indicating feeding of the wire to the wire feed unit 3 to cause the wire feed unit 3 to feed the welding wire 5 at a speed according to the current setting signal Ir. The feed speed control circuit 12 outputs a feed instruction signal indicating a high feed speed value if the current setting signal Ir indicates a high current value, and outputs a feed instruction signal indicating a low feed speed value if the current setting signal Ir indicates a low current value.

Furthermore, the current setting circuit 11d is a circuit for outputting an output voltage setting signal Er indicating a setting voltage of the welding power source 1 to the voltage control circuit 11b.

The voltage detection unit 11e detects an arc voltage V and outputs a voltage value signal Vd indicating the detected voltage value to the voltage control circuit 11b.

The current detection unit 11f detects, for example, the welding current I supplied from the welding power source 1 to the welding wire 5 via the torch 2 and flowing in the arc 7a, 7b and outputs a current value signal Id indicating the detected current value to the voltage control circuit 11b and the feed speed control circuit 12.

The voltage control circuit 11b is a circuit operating with a constant-voltage characteristic and controlling the operation of the power supply circuit 11a such that the voltage according to an output voltage setting signal Er is output from the power supply circuit 11a. The voltage control circuit 11b electrically controls a resistor R and a reactor L existing in the energized passage of the welding power source 1 and achieves a constant-voltage characteristic.

The voltage control circuit 11b calculates a difference signal Ei based on the voltage value signal Vd output from the voltage detection unit 11e, the current value signal Id output from the current detection unit 11f, the current setting signal Ir and the output voltage setting signal Er output from the current setting circuit 11d, and outputs the calculated difference signal Ei to the power supply circuit 11a. The difference signal Ei is a signal indicating the difference between the detected current value and the current value to be output from the power supply circuit 11a.

The power supply circuit 11a has an AC-DC converter for performing AC-DC conversion on a utility alternating current, an inverter circuit for converting the direct current obtained after the AC-DC conversion to a required alternating current by switching, a rectifier circuit for rectifying the converted alternating current and so on. The power supply circuit 11a performs PWM control on the inverter such that the difference signal Ei is reduced according to the difference signal Ei output from the voltage control circuit 11b and outputs the voltage to the welding wire 5. As a result, a predetermined arc voltage V is applied between the base material 4 and the welding wire 5 to thereby cause welding current I to flow therebetween.

Note that the welding power source 1 is configured to receive an input of an output instruction signal from the outside through a control communication line (not illustrated), and the power supply unit 11 causes the power supply circuit 11a to start supplying the welding current I using the output instruction signal as a trigger.
The output instruction signal is, for example, a signal output from the torch 2 side to the welding power source 1 when a handy operation switch provided on the torch 2 side is operated.

### <Current Amplitude Control>

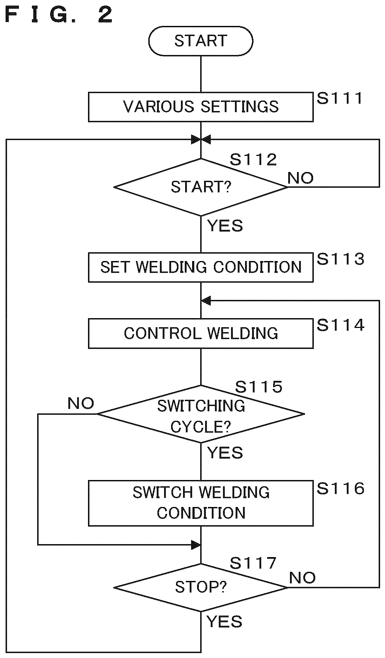

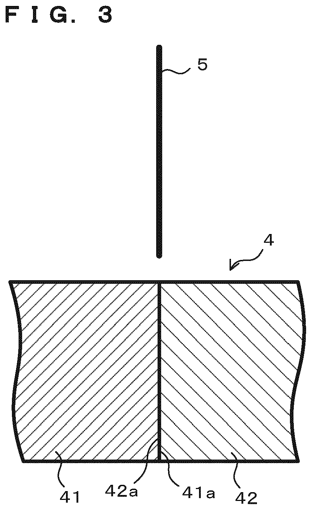

FIG. 2 is a flowchart showing the procedure of an arc welding method according to the present embodiment while FIG. 3 is a side cross-sectional view illustrating the base material 4 of a target to be welded. First, a pair of base materials 4 to be joined by welding are placed in the arc welding device and various settings are performed for a welding mode (step S111). More specifically, as illustrated in FIG. 3, the first base material 41 and the second base material 42 each having a plate shape are prepared and placed with the end surface 41a and the end surface 42a, which are to be welded part, facing each other at a predetermined welding work position, for example. The first base material 41 and the second base material 42 are made of stainless steel. Note that the first base material 41 and the second base material 42 each may be provided with a groove with any shape such as a Y shape, a bevel shape or the like as required. Furthermore, the first base material 41 and the second base material 42 each may be a steel plate made of, for example, mild steel, carbon steel for machine construction, alloy steels for machine construction or the like. It is noted that though the above description is an example of a butt weld joint, any type of the welded joint including a fillet weld joint and a T-joint may be allowed.

After the various settings are performed, the welding power source 1 determines whether or not an output start condition of the welding current I is satisfied (step S112). More specifically, the welding power source 1 determines whether or not an output instruction signal for welding is input. If determining that the output instruction signal is not input, and the output start condition of the welding current I is not satisfied (step S112: NO), the welding power source 1 is placed in a state of waiting an input of the output instruction signal.

If determining that the output start condition for the welding current I is satisfied (step S112: YES), the setting circuit 11c sets the first welding condition as an initial state, for example (step S113). The welding power source 1 then performs welding control by controlling the feed of the welding wire 5 and the output of the power source unit 11 based on the welding condition set by the setting circuit 11c (step S114). More specifically, the feed speed control circuit 12 of the welding power source 1 outputs a feed instruction signal indicating the feed of the wire to the wire feed unit 3 to thereby feed the welding wire 5 at a speed according to the current setting signal Ir. The power source unit 11 of the welding power source 1 detects an arc voltage V and a welding current I by the voltage detection unit 11e and the current detection unit 11f, respectively, and performs PWM control on the output from the power source unit 11 such that the detected arc voltage V and the detected welding current I as well as the external characteristics of the welding power source 1 are coincident with the set welding condition.

If the first welding condition and the second welding condition are set assuming that the average current is 400 A or higher, a buried arc state is obtained. Note that at least one of the first welding condition and the second welding condition may satisfy the buried arc condition. Under the low current condition, especially 350 A or lower, the buried arc is difficult to maintain. The buried arc at the high current condition can provide deep penetration. Furthermore, the buried arc includes a fully-buried arc and a semi-buried arc that will be described later.

The power source unit 11 may be configured to have external characteristics such that the drop of the arc voltage V relative to the rise of the welding current I of 100A is from 2V to 20 V The external characteristic of the power source unit 11 is thus set, which makes it easy to maintain the buried arc state.

FIG. 4 A, FIG4B and FIG.4C illustrate the non-buried arc state, the semi-buried arc state and the fully-buried arc state. In the buried arc welding using a shielding gas containing argon, in the case where a large current having the average current of 350 A or higher is supplied to the welding wire 5 and the welding wire 5 is fed at approximately 5 to 100 m/min., a liquid column 8, which is a molten wire extending in a thin and long manner, is formed at the tip portion 5a of the welding wire 5. Furthermore, a concave molten part 6 made of the molten metal of the base material 4 and the welding wire 5 is formed on the base material 4. An arc 7a with higher brightness is formed between the relatively lower part of the liquid column 8 and the concave molten part 6. Meanwhile, an arc 7b with relatively low brightness is formed between the relatively upper part of the liquid column 8 or the solid welding wire 5 and the concave molten part 6.

FIG. 4A illustrates the state of an arc in which the formation points of the arcs 7a and 7b on the welding wire 5 side or on the liquid column 8 side are not in the space surrounded by the concave molten part 6. FIG. 4B illustrates the state of a semi-buried arc in which only the formation point of the arc 7b on the liquid column 8 side is in the buried space. FIG. 4C illustrates the state of a full-buried arc in which the formation point of the arc 7a on the welding wire 5 side or the liquid column 8 side are fully in the buried space.

In the semi-buried arc welding or the buried arc welding, deep penetration can be obtained by the arc 7a or 7b irradiated on a bottom portion 61 of the concave molten part 6.

Then, the setting circuit 11c determines whether or not a switching cycle has been reached (step S115). The switching frequency ranges from 1 Hz to 5 Hz. The setting circuit 11c determines whether or not a time corresponding to a cycle of the switching frequency has elapsed since the current welding condition was set. If determining that the switching cycle has been reached (step S115: YES), the setting circuit 11c switches the welding condition (step S116). If the first welding condition is set, the setting circuit 11c sets the second welding condition. If the second welding condition is set, the setting circuit 11c sets the first welding condition.

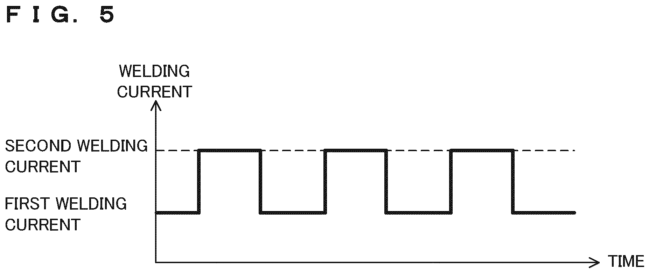

FIG. 5 is a timing chart indicating a switching method for the welding condition according to Embodiment 1. The horizontal axis represents time while the vertical axis represents welding current I. The first welding condition and the second welding condition are periodically switched by the processing at steps S115 and S116, to thereby obtain a periodically varying welding current I as illustrated in FIG. 5.

If the processing at step S116 is completed or if it is determined that the switching cycle has not been reached (step S115: NO), the power source unit 11 of the welding power source 1 determines whether or not the output of the welding current I is to be stopped (step S117). More specifically, the welding power source 1 determines whether or not the output instruction signal is continuously being input. If determining that the input of the output instruction signal is continued and the output of the welding current I is not to be stopped (step S117: NO), the power source unit 11 returns the processing to step S114 to continue the output of the welding current I.

If determining that the output of the welding current I is to be stopped (step S117: YES), the power source unit 11 returns the processing to step S112.

### <Effect of Current Amplitude Control>

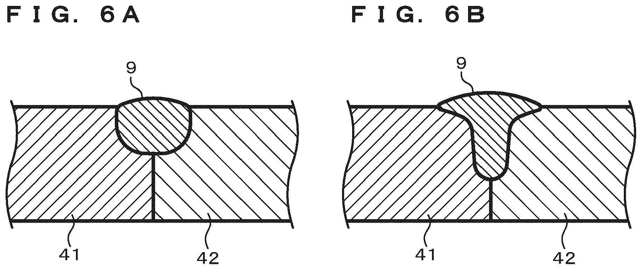

FIG. 6A and FIG. 6B are a cross-sectional view schematically illustrating a welded joint. FIG. 6A is a cross-sectional view of a welded joint obtained by non-buried arc welding while FIG. 6B is a cross-sectional view of a welded joint obtained by buried arc welding. The buried arc welding shows penetration of the central portion of a bead 9 deeper than that obtained in a normal arc welding, that is, so-called finger-like penetration. It is known that this trend is prevalent as the Ar content in the shielding gas increases, and blowholes are prone to remain at the deepest portion. Moreover, argon is an inert gas and is a cause of blowholes when entrapped in the molten metal. Accordingly, in the buried arc welding using a shielding gas containing argon, blowholes are highly likely to occur.

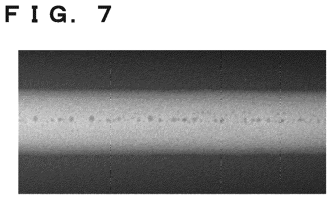

FIG. 7 is an image showing the result of a radiograph test of a welded joint when current amplitude control according to Embodiment 1 is not performed. When buried arc welding is performed on a stainless steel plate SUS 304 by using a stainless solid wire at the welding current of 400A and a welding speed of 30 cm/min., for example, a large number of blowholes occur as shown in the result of the radiograph test in FIG. 7.

As such, in the present Embodiment 1, the occurrence of the blowholes is suppressed by switching and varying the welding current I at a cycle of a frequency ranging from 1 Hz to 5 Hz between the first welding condition and the second welding condition where the reference current is 350 A or more and the current variation range is in the range from 50A to 150A.

FIG. 8 is an image indicating the result of a radiograph test of a welded joint when the current amplitude control according to Embodiment 1 is performed. In FIG. 8, "A (great)" indicates that no blowholes occur, "B (good)" indicates that the amount of blowholes decreases, and "C (marginal)" indicates that the amount of blowholes slightly decreases.

As illustrated in the middle column in FIG. 8, when welding is performed employing the stainless steel plate SUS 304 as the base material 4 and a stainless solid wire as a welding wire 5 under the condition of the average welding current (reference current) of 400 A, the arc voltage of 31.5 V, the wire extension of 20 mm and the welding speed of 30 cm/min., the occurrence of blowholes can be suppressed by varying the welding condition between the first welding condition in which the welding current I is 300 A and the second welding condition in which the welding current I is 500A at a frequency of 2 Hz or 3 Hz. If the above-described first welding condition and second welding condition vary at a frequency of 1 Hz, the amount of blowholes can be reduced though less effect is produced than that produced at frequencies of 2 Hz or above.

Furthermore, as illustrated in the upper column in FIG. 8, the amount of blowholes can slightly be reduced by performing welding under the same condition as above by varying the welding condition between the first welding condition in which the welding current I is 350 A and the second welding condition in which the welding current I is 450 A at frequencies of 1 Hz or above.

Moreover, as illustrated in the lower column in FIG. 8, the amount of blowholes can be suppressed by performing welding under the same condition as above by varying the welding condition between the first welding condition in which the welding current I is 250 A and the second welding condition in which the welding current I is 550 A at a frequency of 1 Hz.

The result of the radiograph test as described above shows that setting the current variation range to 500 A or higher or more preferably 100 A or higher can effectively suppress blowholes. The result also shows that setting the varying frequency to 1 Hz or above or more preferably 2 Hz or above can effectively suppress blowholes.

As such, in the arc welding method and the arc welding device according to Embodiment 1, the occurrence of blowholes can be suppressed in the consumable electrode arc welding operated at the average welding current of 350 A or higher by using a shielding gas containing argon.

Furthermore, according to Embodiment 1, by the buried arc welding, deep penetration can be obtained while the occurrence of blowholes can be suppressed.

Moreover, according to Embodiment 1, the occurrence of blowholes can effectively be suppressed in the buried arc welding of stainless steel.

Though, in Embodiment 1, an example in which the two welding conditions including the first welding condition and the second welding condition periodically vary is described, in some embodiments, three or more welding conditions may periodically be switched.

Though, in Embodiment 1, an example in which blowholes are suppressed in the buried arc welding is mainly described, in some embodiments, the present invention may be applied to the non-buried arc welding.

### Embodiment 2

The arc welding method and the arc welding device according to Embodiment 2 are different from those of Embodiment 1 in that the setting voltage further varies from 10 Hz to 1000 Hz, and thus this difference will mainly be described below. Since the other configuration and working effect are similar to those of Embodiment 1, corresponding parts are denoted by similar reference codes and detailed description thereof will not be repeated.

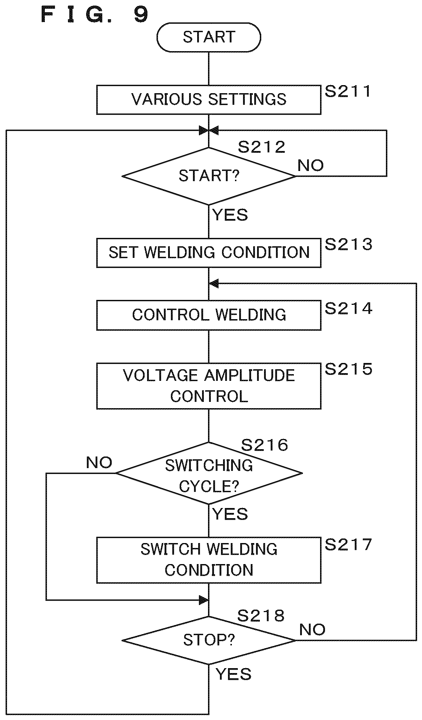

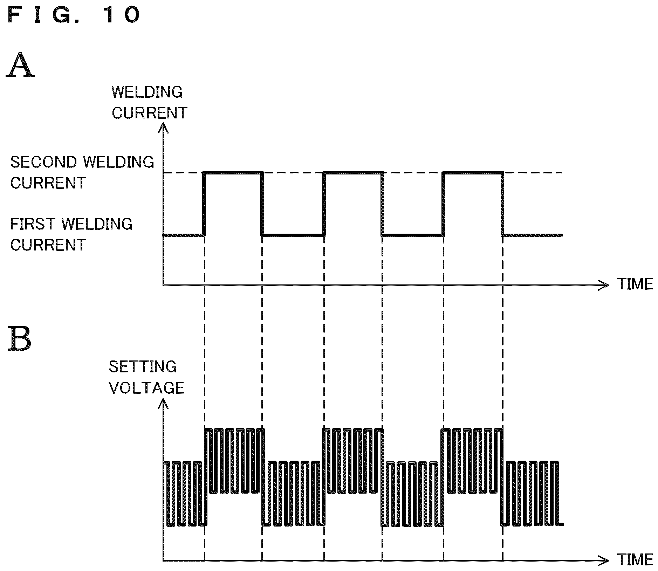

FIG. 9 is a flowchart showing the procedure of an arc welding method according to Embodiment 2. FIG. 10 is a timing chart showing a switching method for a welding condition according to Embodiment 2. In FIG. 10, the horizontal axis represents time while the vertical axis in FIG. 10A represents welding current I and the vertical axis in FIG. 10B represents setting voltage. Note that FIG. 10A shows a first welding current and a second welding current respectively corresponding to the first welding condition and the second welding condition though it does not show the variation by the high frequency vibration of the setting voltage.

The welding power source 1 according to Embodiment 2 executes processing similar to steps S111 to S114 of Embodiment 1 at steps S211 to S214. Furthermore, the voltage control circuit 11b according to Embodiment 2 periodically varies the setting voltage at frequencies from 10 Hz to 1000 Hz, preferably at frequencies from 50 Hz to 300 Hz or more preferably at frequencies from 80 Hz to 200 Hz (step S215). By the variation of the setting voltage, the welding current I varies at a current amplitude 50A or higher, for example. Since the processing at steps S216 to S218 is processing similar to steps S115 to S117 of Embodiment 1, detailed description thereof will not be repeated.

According to the arc welding method and the arc welding device of Embodiment 2, by stabilizing the molten pool by minute vibrations, the distortion and drips of a bead 9 can be suppressed while by slowly and widely vibrating the molten pool at frequencies from 1 Hz to 5 Hz, the occurrence of blowholes can be reduced.

### Embodiment 3

The arc welding method and arc welding device according to Embodiment 3 are different from those of Embodiments 1 and 2 in that in the buried arc welding using a shielding gas containing argon and performing current amplitude control, by providing a welding condition in which spray transfer is set at the start of welding for a short period of time, the droplet transfer mode is prompted to make a transition to the spray transfer in the main welding period, which stabilizes the welding as well as reduces the blowholes. Since the other configuration and working effect are similar to those of Embodiment 1 or 2, corresponding parts are denoted by similar reference codes and detailed description thereof will not be repeated.

In the arc welding method and the arc welding device according to Embodiments 1 and 2, though the occurrence of blowholes can be suppressed, welding may sometimes be destabilized as a result of the molten pool being vibrated. Since the buried arc welding involves a large amount of molten metal and a significant variation of the welding current I due to high current welding, any short-circuiting would considerably destabilize the welding and cause a large amount of sputtered particles.

As one method of avoiding a short circuit, the droplet transfer is constantly set to the spray transfer. For example, in the case of a stainless solid wire with a wire diameter of ϕ 1.6 and a wire extension of 20 mm, the droplet transfer can be set to the spray transfer in the current range of 250 A or higher. Note that the current range from 250 A to 400 A is a region where repelled transfer and the spray transfer coexist, and thus the droplet transfer is not necessarily the spray transfer. When the droplet transfer is the repelled transfer, short circuit often occurs, resulting in an unstable arc.

The droplet transfer mode are mainly divided into three modes of globular transfer, short-circuiting transfer and the spray transfer. The globular transfer is a mode in which a droplet having a diameter equal to or greater than that of the welding wire 5 is transferred and is subdivided into drop transfer and the repelled transfer. The repelled transfer is a mode in which a droplet having a diameter greater than the wire diameter is formed at the tip portion 5a of the welding wire 5, is repelled away by the reaction force of the arc and shows irregular and unstable behavior. As described above, in the repelled transfer, an arc is destabilized. The spray transfer is a mode in which a droplet having a diameter smaller than that of the welding wire 5 is transferred, so that an arc is stable.

The simplest way to prompt the transition to the spray transfer in the region where the repelled transfer and the spray transfer coexist is only required to raise the arc voltage and extend the arc length. However, when the arc length is long, the concentration of arc is lowered, which reduces penetration and causes arc distortion, leading to arc instability due to magnetic flow. In the buried arc welding according to Embodiments 1 and 2, the arc length is required to be considerably long, which is not practically realistic.

Meanwhile, once the droplet transfer makes a transition to the spray transfer, the welding is less likely to be destabilized even if current amplitude control is performed, and the spray transfer tends to be stably maintained. In the current region where the repelled transfer and the spray transfer coexist as the droplet transfer, once the droplet transfer makes a transition to the spray transfer, the spray transfer is intended to maintain without returning to the repelled transfer.

As such, in Embodiment 3, the technique is described for prompting the transition of the droplet transfer to the spray transfer in the main welding by providing a welding condition in which the spray transfer is employed as the droplet transfer for a short period of time at the start of the welding.

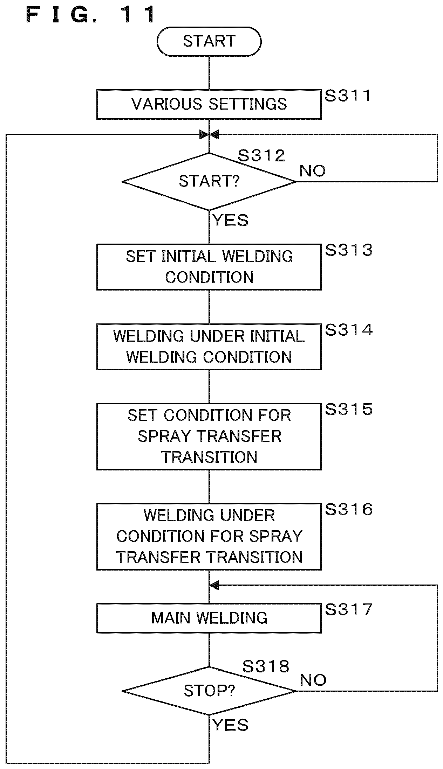

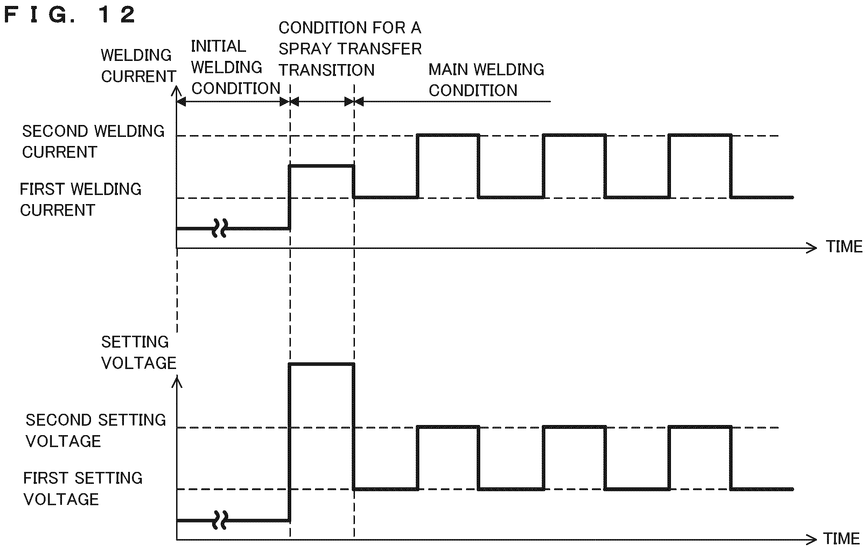

FIG. 11 is a flowchart showing the procedure of an arc welding method according to Embodiment 3. FIG. 12 is a timing chart illustrating a switching method for a welding condition according to Embodiment 3. In FIG. 12, the horizontal axis represents time, and the vertical axis for the upper time chart represents welding current I while the vertical axis for the lower time chart represents setting voltage.

First, placement of the base materials 4 and various settings are performed for welding mode, etc. (step S311). After the various settings are performed, the welding power source 1 determines whether or not an output start condition of the welding current I is satisfied (step S312). If determining that the output start condition of the welding current I is not satisfied (step S312: NO), the welding power source 1 is placed in a state of waiting an input of an output instruction signal. If determining that the output start condition for the welding current I is satisfied (step S312: YES), the setting circuit 11c sets a predetermined initial welding condition (step S313) and performs welding under the initial welding condition (step S314). The initial welding condition is a condition for initial welding to be performed before main welding, which is buried arc welding using current amplitude control, is started. The welding current I and the setting voltage for the initial welding condition are setting values lower than those for the main welding, and by welding under the initial welding condition before the main welding, a smooth transition to the main welding can be made. The welding current I and the setting voltage for the initial welding condition are, for example, 200 A and 32 V, respectively. The initial welding is performed for 2 to 3 seconds, for example.

Next, the setting circuit 11c sets the condition for a spray transfer transition as illustrated in FIG. 12 (step S315) and performs welding under the condition for a spray transfer transition (step S316). Under the condition for a spray transfer transition, at least the setting voltage is set to a voltage value higher than the setting voltage at the high current level in the current amplitude control. Though the magnitude of the welding current I is not limited to a particular value, a current value between the lower current value and the higher current value in the current amplitude control may be assumed as a setting current value under the condition for a spray transfer transition.

For example, in the buried arc welding using a stainless steel SUS 304 as the base material 4 and a stainless solid wire with the wire diameter of ϕ 1.6 as the welding wire 5 under the condition of the average welding current of 400 A, a wire extension length of 20 mm and the welding speed of 30 cm/min., welding is performed by varying the welding current I between the two conditions of 300 A (at a low current level) and 500 A (at a high current level) at a frequency of 2 Hz. The setting voltage at 300 A (at the low current level) is 33 V while the setting voltage at 500 A (at the high current level) is 35 V. Under the condition in which the welding current is 300 A (at the low current level) and the setting voltage is 33 V, the repelled transfer and the spray transfer coexist for the droplet transfer. In addition, under the condition in which the welding current is 500 A (at the high current level) and the setting voltage is 35 V, the spray transfer is employed as the droplet transfer.

In such a main welding condition, after completion of the initial welding condition, a condition in which the welding current is 400 A and the setting voltage is 37 V may be set as a condition for the spray transfer transition for a short period of time before transition to the main condition is made. Under the condition for the spray transfer transition, the droplet transfer is entirely the spray transfer. Once the droplet transfer completely makes a transition to the spray transfer, the spray transfer transition is stably maintained at the low current level and the high current level under the succeeding main condition.

The welding under the condition for the spray transfer transition is performed for a short period of time, for example, 0.5 seconds. The time period during which welding under the condition for the spray transfer transition is performed may be set to a time period corresponding to one cycle or two cycles of the current amplitude control, for example. In addition, the time period during which welding under the condition for the spray transfer transition is performed may be set to a time period shorter than the time period for the initial welding.

Next, the setting circuit 11c performs the buried arc welding using the current amplitude control according to Embodiment 1 or Embodiment 2 as the main welding (step S317). Since the processing at step S318 as below is similar to that at step S117, detailed description thereof will not be repeated.

According to the arc welding method and the arc welding device of Embodiment 3, in the buried arc welding using current amplitude control, the droplet transfer mode can be held at the spray transfer at the start of the welding. Specifically, welding is performed by a voltage higher than the setting voltage at the high current level in the current amplitude control, whereby the droplet transfer mode can surely be set to the spray transfer.

Accordingly, the droplet transfer mode is held at the spray transfer, to thereby suppress the occurrence of a short circuit, which enables the stable main welding.

Though, in Embodiment 3, the current amplitude control and the transition to the spray transfer in the buried arc welding are described, in some embodiments, Embodiment 3 may be applied to the non-buried arc welding.

In addition, though the example is described in which welding under the condition for the spray transfer transition is performed at the start of the welding, specifically after the initial welding before the main welding, welding under the condition for the spray transfer transition may be performed during the main welding for a short period of time. If a short circuit occurs during the main welding, for example, welding may be performed for a short period of time under the condition for the spray transfer transition when the arc fires again. The transition to the spray transfer is prompted when a short circuit occurs, which can stabilize the welding.

### Embodiment 4

The arc welding method and the arc welding device according to Embodiment 4 are different from those of Embodiments 1 to 3 in that in the buried arc welding using a shielding gas containing argon and performing current amplitude control, the setting voltage at the low current condition is corrected so as to be slightly higher than a standard voltage related to the direct current gas metal arc (GMA), whereby occurrence of a short circuit is prevented, to stabilize the welding as well as reduce the occurrence of blowholes. Thus, the difference will mainly be described below. Since the other configuration and working effect are similar to those of Embodiments 1 to 3, corresponding parts are denoted by similar reference codes and detailed description thereof will not be repeated.

Embodiment 4 describes a case where the amplitude control of the welding current I is performed by using the first welding condition and the second welding condition that are employed in the non-buried arc welding not performing current amplitude control, for example, direct current GMA welding. The welding power source 1 of Embodiment 4 previously stores the first welding condition and the second welding condition as standard welding conditions.

In the direct current GMA welding at 350 A or lower, the parameters of the welding condition are adjusted such that the short-circuiting transfer is employed as the droplet transfer mode. Thus, when the current amplitude control according to Embodiments 1 to 3 is performed, a short circuit tends to occur at the low current condition. Especially the high current welding at the average current of 400 A or higher involves a large amount of molten metal, and any short-circuiting would considerably destabilizes the welding. A control method of suppressing the occurrence of blowholes without destabilizing the welding is desired.

As such, in Embodiment 4, a technique is described in which the setting voltage under at least the low current level condition for the current amplitude control is corrected so as to be slightly higher, to thereby suppress the occurrence of a short circuit, which prevents instability of the welding as well as reduces the blowholes.

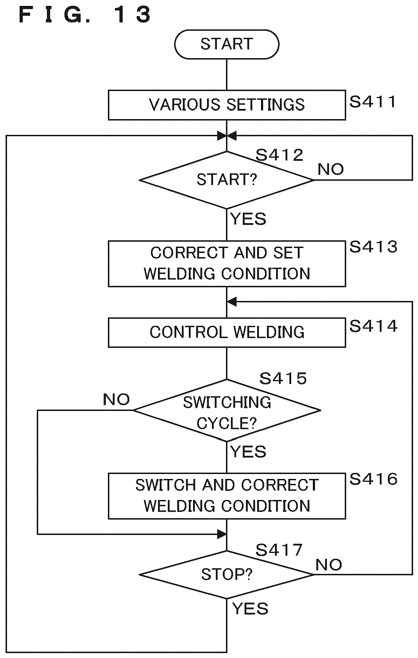

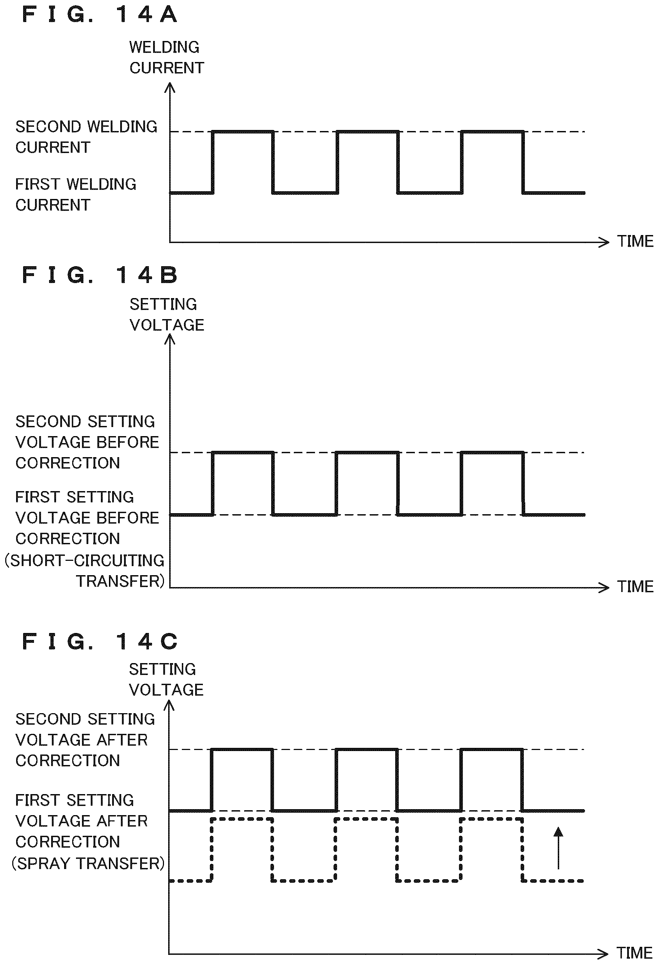

FIG. 13 is a flowchart showing the procedure of an arc welding method according to Embodiment 4. FIG. 14A, FIG. 14B and FIG. 14C are a timing chart showing a switching method for a welding condition according to Embodiment 4. In FIG. 14 A, FIG. 14B and FIG. 14C, the horizontal axis represents time while the vertical axis in FIG. 14A represents welding current I and the vertical axes in FIG. 14B and FIG. 14C represent setting voltage. FIG. 14B represents the setting voltage before correction while FIG. 14C represents the setting voltage after correction.

The welding power source 1 according to Embodiment 4 executes processing similar to steps S111 to S112 of Embodiment 1 at steps S411 to S412. If determining that an output start condition of the welding current I is satisfied at step S412 (step S412: YES), the setting circuit 11c corrects a standard first welding condition in the direct current GMA welding and sets the corrected one as an initial state, for example (step S413). More specifically, as illustrated in FIG. 14B and FIG. 14C, the setting voltage related to the first welding condition is set to a slightly higher value. More specifically, a voltage 4 V higher than the setting voltage related to the first welding condition is set. The setting voltage before correction is a setting where the short-circuiting transfer is employed as the droplet transfer mode while the setting voltage after correction is a setting when the spray transfer is employed as the droplet transfer mode.

Then, the setting circuit 11c periodically varies the setting voltage at frequencies from 10 Hz to 1000 Hz, preferably from 50 Hz to 300 Hz, more preferably from 80 Hz to 200 Hz. Note that when the welding condition is switched at step S416, the setting circuit 11c switches the welding condition by correction (step S416). If the first welding condition is set, the setting circuit 11c corrects and sets the second welding condition. If the second welding condition is set, the setting circuit 11c corrects and sets the first welding condition. In both cases, the setting circuit 11c sets a voltage a predetermined value higher than the setting voltage under the first welding condition and under the second welding condition. Specifically, the setting circuit 11c corrects the setting voltage such that the first welding condition as the low current level condition allows the droplet transfer mode to be the spray transfer. More specifically, the setting circuit 11c sets a voltage 4V higher than the standard setting voltage. Similarly, the setting circuit 11c sets the setting voltage under the second welding condition to a voltage 4 V higher than the standard setting voltage.

Since the processing at steps S414 to S417 except for the correction of the setting voltage is similar to the processing at steps S114 to S117, detailed description thereof will not be repeated.

### Example

In the buried arc welding operated at the reference current 400 A employing a stainless solid wire with the wire diameter of ϕ 1.6 as the welding wire 5 and the mixture containing 98% of argon Ar and 2% of oxygen O₂ as a shielding gas, the welding current I varies at ± 100 A at a frequency of 2 Hz. The setting voltage is set to a standard voltage (specifically 31 V) corresponding to the reference setting current of 400 A. Here, the welding current I periodically repeats 500 A of the high current level condition and 300 A of the low current level condition. The standard setting voltage corresponding to 500 A of the high current level condition is 33 V The standard setting voltage corresponding to 300 A of the low current level condition is 29 V, in which the droplet transfer is normally the short-circuiting transfer. Hence, the setting voltage of the low current level condition is corrected +4 V higher to become 33 V By thus correcting the setting voltage, the droplet transfer mode during the main welding can be held in the spray transfer to thereby prevent a short circuit from occurring, which can prevent welding instability due to the occurrence of a short circuit and can effectively reduce the blowholes by variation of the current amplitude.

According to the arc welding method and the arc welding device of Embodiment 4, by changing the setting voltage that allows the droplet transfer mode to be the spray transfer even if the welding current I is low, the droplet transfer mode can be more reliably held in the spray transfer to thereby prevent a short circuit from occurring, which can stabilize the welding and reduce the blowholes.

Though in Embodiment 4, an example in which the setting voltage for the first welding condition as the high current level condition and the setting voltage for the second welding condition as the low current level condition are corrected is described, in some embodiments, only the setting voltage for the second welding condition may be corrected.

### Embodiment 5

The arc welding method and the arc welding device according to Embodiment 5 are different from those of Embodiments 1 to 4 in that by the combined use of the buried arc welding employing a solid wire and the GMA welding employing a flux-cored wire, improvement in welding efficiency, cost reduction of a welding material and excellent bead surface appearance are achieved, and thus the difference will mainly be described below. Since the other configuration and working effect are similar to those of Embodiments 1 to 4, corresponding parts are denoted by similar reference codes and detailed description thereof will not be repeated.

In the welding method for stainless steel, there have been various methods such as the GMA welding, TIG welding, submerge arc welding, laser welding, etc. The GMA welding is a particularly common welding method among others and typified by two methods including a method of employing a flux-cored wire as the welding wire 5 and a method of employing a solid wire as the welding wire 5.

In the case where the flux-cored wire is employed, carbon dioxide is often used for a shielding gas. The method employing the flux-cored wire has the characteristics of less sputter amount, higher welding stability and well bead appearance than the method employing the solid wire. Since these characteristics are preferred, the flux-cored wire is often used in welding of especially a thick stainless plate.

Meanwhile, in the case where the solid wire is employed, approximately 2% of oxygen is often added to an argon-based shielding gas for the purpose of welding stability. The shielding gas costs higher than carbon dioxide while the solid wire costs lower than the flux-cored wire. As a total welding cost, the use of the solid wire often costs lower than the use of the flux-cored wire. Note that the solid wire, which easily causes blowholes at the high current region and poor bead appearance with considerably oxide surface, is not often used for welding of a thick plate.

As such, in Embodiment 5, a technique is described in which by the combined use of the high-current buried arc welding operated at a high current of 300 A or higher employing a solid wire and the GMA welding employing a flux-cored wire, improvement in welding efficiency, reduction of a welding cost and excellent bead appearance are achieved.

Since it is only on the outermost surface of the bead in welding that the bead appearance is critical, the high-current buried arc welding is performed in the other passes except for the last pass, which enables welding with high efficiency and a low cost. The flux-cored wire is employed for welding in the last pass, which enables excellent bead appearance.

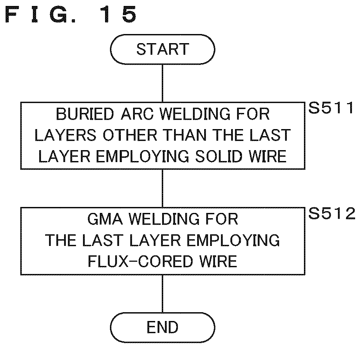

FIG. 15 is a flowchart showing the procedure of an arc welding method according to Embodiment 5. If the base material 4 is multi-layer welded, welding the layers other than the last layer is performed by the buried arc welding employing a solid wire (step S511). At step S511, the buried arc welding is performed while performing current amplitude control by using the arc welding method according to Embodiments 1 to 4. According to the buried arc welding employing the solid wire, reduction in the number of welding passes and the use of an inexpensive solid wire enable welding of the base material 4 efficiently and inexpensively. In addition, as described above, by the current amplitude control, the occurrence of the blowholes can be prevented.

Next, welding the last layer is performed by the GMA welding employing a flux-cored wire (step S512). Welding the last layer needs not be performed by buried arc welding and needs only be performed by non-buried arc welding, for example, the normal GMA welding. The last layer can naturally be welded by the buried arc welding as well. It is noted that the welding employing the flux-cored wire needs not be performed for only the last pass. For example, the welding employing the flux-cored wire may be performed in the second pass and thereafter, for example.

### Example

In the SUS 304 butt weld joint using the base materials 4 having a plate thickness of 19 mm, a backing plate having a plate thickness of 6 mm, a bevel groove having a groove angle of 35 degrees and a 6-mm gap, the first layer and the second layer are welded by the buried arc welding at the average current of 450 A employing a solid wire and the third layer is welded by the direct current GMA welding at 250 A employing the flux-cored wire. In comparison with welding all the passes employing the conventional welding method using the flux-cored wire, better bead surface appearance can be obtained while the number of welding passes and the cost of a welding material are reduced.

According to the arc welding method and the arc welding device of Embodiment 5, for welding of a stainless thick plate, improved welding efficiency, reduced welding cost and excellent bead appearance can be achieved.

It is to be noted that, as used herein and in the appended claims, the singular forms "a", "an", and "the" include plural referents unless the context clearly dictates otherwise.

It is to be noted that the disclosed embodiment is illustrative and not restrictive in all aspects. The scope of the present invention is defined by the appended claims.

### [Description of Reference Numerals]

- 1: welding power source
- 2: torch
- 3: wire feed unit
- 4: base material
- 5: welding wire
- 6: molten part
- 11: power source unit
- 11a: power supply circuit
- 11b: voltage control circuit
- 11c: setting circuit
- 11d: current setting circuit
- 12: feed speed control circuit

## Claims

1. A consumable electrode arc welding method using a shielding gas containing argon, comprising:
setting a first welding condition in which a first welding current is supplied to a welding wire (5); and
setting a second welding condition in which a second welding current is supplied to a welding wire (5), **characterised in that**
the first welding condition and the second welding condition are welding conditions in which a reference current of the welding current is 350 A or higher and a current variation range is from 50 A to 150 A, and
the first welding condition and the second welding condition are switched at a cycle of a frequency ranging from 1 Hz to 5 Hz.

2. The arc welding method according to claim 1, wherein
the first welding condition or the second welding condition is a welding condition in which a tip portion (5a) of a welding wire (5) or an arc formation point in a liquid column (8) formed at the tip portion (5a) goes into a space surrounded by a concave molten part (6) formed on a base material (4) by an arc.

3. The arc welding method according to claim 2, further comprising varying a setting voltage to be applied between the welding wire (5) and the base material (4) in a range from 10 Hz to 1000 Hz as well as switching the first welding condition and the second welding condition at a cycle of a frequency ranging from 1 Hz to 5 Hz.

4. The arc welding method according to any one of claims 1 to 3, wherein the base material (4) to be welded is stainless steel.

5. The arc welding method according to any one of claims 1 to 4, further comprising setting a welding condition in which spray transfer is employed.

6. The arc welding method according to claim 5, wherein the welding condition in which the spray transfer is employed is set for a predetermined time period before welding performed by periodically switching the first welding condition and the second welding condition is started.

7. The arc welding method according to claim 5 or 6, wherein the welding condition in which the spray transfer is employed as the droplet transfer mode includes setting voltages higher than a setting voltage under the first condition and a setting voltage under the second condition.

8. The arc welding method according to any one of claims 1 to 7, wherein
the first welding condition and the second welding condition include setting voltages that allow the droplet transfer mode to be the spray transfer even if welding current is low.

9. The arc welding method according to any one of claims 1 to 8, wherein the first welding condition or the second welding condition is a welding condition in which a tip portion (5a) of a welding wire (5) or an arc formation point in a liquid column (8) formed at the tip portion (5a) goes into a space surrounded by a concave molten part (6) formed on a base material (4) by an arc, and further comprising:
welding a layer other than a last layer by periodically switching the first welding condition and the second welding condition using a solid wire in a case where the base material (4) is multi-layer welded; and
welding the last layer using a flux-cored wire in a case where the base material (4) is multi-layer welded.

10. A consumable electrode arc welding device using a shielding gas containing argon, comprising:
a setting circuit (11c) that is configured to set a welding condition by switching between a first welding condition in which a first welding current is supplied to a welding wire (5) and a second welding condition in which a second welding current is supplied to a welding wire (5), and **characterised in that**
the first welding condition and the second welding condition are welding conditions in which a reference current of the welding current is 350 A or higher and a current variation range is from 50 A to 150 A, and
the setting circuit is configured to switch the first welding condition and the second welding condition at a cycle of a frequency ranging from 1 Hz to 5 Hz.

## Patentansprüche

1. Lichtbogenschweißverfahren mit verbrauchbarer bzw. abschmelzender Elektrode unter Verwendung eines Schutzgases, das Argon enthält, welches Folgendes aufweist:
Einstellen eines ersten Schweißzustandes, in welchem ein erster Schweißstrom an einen Schweißdraht (5) geliefert wird; und
Einstellen eines zweiten Schweißzustandes, in welchem ein zweiter Schweißstrom an einen Schweißdraht (5) geliefert wird, **dadurch gekennzeichnet, dass**
der erste Schweißzustand und der zweite Schweißzustand Schweißzustände sind, in denen ein Referenzstrom des Schweißstroms 350 A oder höher ist, und ein Stromvariationsbereich von 50 A bis 150 A ist, und
der erste Schweißzustand und der zweite Schweißzustand in einem Zyklus einer Frequenz im Bereich von 1 Hz bis 5 Hz umgeschaltet werden.

2. Lichtbogenschweißverfahren nach Anspruch 1, wobei
der erste Schweißzustand oder der zweite Schweißzustand ein Schweißzustand ist, in welchem ein Spitzenteil (5a) eines Schweißdrahtes (5) oder ein bogenbildungspunkt in einer flüssigen Säule (8), die an dem Spitzenteil (5a) geformt ist, in einen Raum geht, der durch einen konkaven geschmolzenen Teil (6) umgeben ist, der an einem Basisteil (4) durch einen Lichtbogen geformt wird.

3. Lichtbogenschweißverfahren nach Anspruch 2, welches weiter aufweist, eine Einstellungsspannung, die zwischen dem Schweißdraht (5) und dem Basismaterial (4) angelegt werden soll, in einem Bereich von 10 Hz bis 1000 Hz zu variieren, genauso wie den ersten Schweißzustand und den zweiten Schweißzustand in einem Zyklus mit einer Frequenz im Bereich von 1 Hz bis 5 Hz umzuschalten.

4. Lichtbogenschweißverfahren nach einem der Ansprüche 1 bis 3, wobei das Basismaterial (4), das zu schweißen ist, ein rostfreier Stahl ist.

5. Lichtbogenschweißverfahren nach einem der Ansprüche 1 bis 4, welches weiter aufweist, einen Schweißzustand einzustellen, in welchem eine Spray- bzw. Sprühübertragung eingesetzt wird.

6. Lichtbogenschweißverfahren nach Anspruch 5, wobei der Schweißzustand, in welchem die Sprühübertragung eingesetzt wird, für eine vorbestimmte Zeitperiode eingestellt wird, bevor das Schweißen gestartet wird, welches durch periodisches Umschalten des ersten Schweißzustandes und des zweiten Schweißzustandes durchgeführt wird.

7. Lichtbogenschweißverfahren nach Anspruch 5 oder 6, wobei der Schweißzustand, in welchem die Sprühübertragung als der Tröpfchenübertragungsmodus eingesetzt wird, aufweist, höhere Spannungen einzustellen als eine Einstellungsspannung im ersten Zustand und eine Einstellungsspannung im zweiten Zustand.

8. Lichtbogenschweißverfahren nach einem der Ansprüche 1 bis 7, wobei der erste Schweißzustand und der zweite Schweißzustand Einstellungsspannungen aufweisen, die gestatten, dass der Tröpfchenübertragungsmodus die Spray- bzw. Sprühübertragung ist, auch wenn der Schweißstrom gering ist.

9. Lichtbogenschweißverfahren nach einem der Ansprüche 1 bis 8, wobei der erste Schweißzustand oder der zweite Schweißzustand ein Schweißzustand ist, in welchem ein Spitzenteil (5a) eines Schweißdrahtes (5) oder ein Lichtbogenbildungspunkt in einer flüssigen Säule (8), die an dem Spitzenteil (5a) geformt wird, in einen Raum geht, der von einem konkaven geschmolzenen Teil (6) umgeben ist, der an einem Basismaterial (4) durch einen Lichtbogen geformt wird, und welches weiter Folgendes aufweist:
Schweißen einer anderen Lage als einer letzten Lage durch periodisches Umschalten des ersten Schweißzustandes und des zweiten Schweißzustandes unter Verwendung eines festen bzw. vollen Drahtes in einem Fall, wo das Basismaterial (4) mehrlagig geschweißt ist; und
Schweißen der letzten Lage unter Verwendung eines Drahtes mit Flussmittelkern in einem Fall, wo das Basismaterial (4) mehrlagig geschweißt ist.

10. Lichtbogenschweißvorrichtung mit verbrauchbarer bzw. abschmelzender Elektrode unter Verwendung eines Schutzgases, das Argon enthält, welches Folgendes aufweist:
eine Einstellungsschaltung (11c), die konfiguriert ist, um einen Schweißzustand durch Umschalten zwischen einem ersten Schweißzustand, in dem ein erster Schweißstrom an einen Schweißdraht (5) geliefert wird, und einem zweiten Schweißzustand, in dem ein zweiter Schweißstrom an einen Schweißdraht (5) geliefert wird, einzustellen, und
**dadurch gekennzeichnet, dass**
der erste Schweißzustand und der zweite Schweißzustand Schweißzustände sind, in denen ein Referenzstrom des Schweißstroms 350 A oder höher ist und ein Stromvariationsbereich von 50 A bis 150 A ist, und
die Einstellungsschaltung konfiguriert ist, um den ersten Schweißzustand und den zweiten Schweißzustand in einem Zyklus einer Frequenz im Bereich von 1 Hz bis 5 Hz umzuschalten.

## Revendications

1. Procédé de soudure à l'arc à électrode consommable utilisant un gaz de protection contenant de l'argon, comprenant :
l'établissement d'une première condition de soudure dans laquelle un premier courant de soudure est fourni à un fil à souder (5) ; et
l'établissement d'une deuxième condition de soudure dans laquelle un deuxième courant de soudure est fourni à un fil à souder (5), **caractérisé en ce que**
la première condition de soudure et la deuxième condition de soudure sont des conditions de soudure dans lesquelles un courant de référence du courant de soudure est de 350 A ou plus et une plage de variation du courant est de 50 A à 150 A, et
la première condition de soudure et la deuxième condition de soudure sont commutées à un cycle d'une fréquence allant de 1 Hz à 5 Hz.

2. Procédé de soudure à l'arc selon la revendication 1, dans lequel
la première condition de soudure ou la deuxième condition de soudure est une condition de soudure dans laquelle une partie de pointe (5a) d'un fil à souder (5) ou un point de formation d'arc dans une colonne de liquide (8) formée au niveau de la partie de pointe (5a) pénètre dans un espace entouré par une partie en fusion concave (6) formée sur un matériau de base (4) par un arc.

3. Procédé de soudure à l'arc selon la revendication 2, comprenant en outre la modification d'une tension de réglage à appliquer entre le fil à souder (5) et le matériau de base (4) dans une plage de 10 Hz à 1000 Hz ainsi que la commutation de la première condition de soudure et de la deuxième condition de soudure à un cycle d'une fréquence allant de 1 Hz à 5 Hz.

4. Procédé de soudure à l'arc selon l'une quelconque des revendications 1 à 3, dans lequel le matériau de base (4) à souder est de l'acier inoxydable.

5. Procédé de soudure à l'arc selon l'une quelconque des revendications 1 à 4, comprenant en outre l'établissement d'une condition de soudure dans laquelle un transfert par pulvérisation est utilisé.

6. Procédé de soudure à l'arc selon la revendication 5, dans lequel la condition de soudure dans laquelle le transfert par pulvérisation est utilisé est établie pendant une période de temps prédéterminée avant que la soudure effectuée en commutant périodiquement la première condition de soudure et la deuxième condition de soudure ne commence.

7. Procédé de soudure à l'arc selon la revendication 5 ou 6, dans lequel la condition de soudure dans laquelle le transfert par pulvérisation est utilisé comme mode de transfert de gouttelettes comporte des tensions de réglage supérieures à une tension de réglage dans la première condition et à une tension de réglage dans la deuxième condition.

8. Procédé de soudure à l'arc selon l'une quelconque des revendications 1 à 7, dans lequel
la première condition de soudure et la deuxième condition de soudure incluent des tensions de réglage qui permettent au mode de transfert de gouttelettes d'être le transfert par pulvérisation même si le courant de soudure est faible.

9. Procédé de soudure à l'arc selon l'une quelconque des revendications 1 à 8,
dans lequel la première condition de soudure ou la deuxième condition de soudure est une condition de soudure dans laquelle une partie de pointe (5a) d'un fil à souder (5) ou un point de formation d'arc dans une colonne de liquide (8) formée au niveau de la partie de pointe (5a) pénètre dans un espace entouré par une partie en fusion concave (6) formée sur un matériau de base (4) par un arc, et comprenant en outre :
la soudure d'une couche autre qu'une dernière couche en commutant périodiquement la première condition de soudure et la deuxième condition de soudure à l'aide d'un fil solide dans un cas où le matériau de base (4) est soudé multicouche ; et
la soudure de la dernière couche à l'aide d'un fil fourré dans un cas où le matériau de base (4) est soudé en plusieurs couches.

10. Dispositif de soudure à l'arc à électrode consommable utilisant un gaz de protection contenant de l'argon, comprenant :
un circuit de réglage (11c) qui est configuré pour établir une condition de soudure en commutant entre une première condition de soudure dans laquelle un premier courant de soudure est fourni à un fil à souder (5) et une deuxième condition de soudure dans laquelle un deuxième courant de soudure est fourni à un fil à souder (5), et **caractérisé en ce que**
la première condition de soudure et la deuxième condition de soudure sont des conditions de soudure dans lesquelles un courant de référence du courant de soudure est de 350 A ou plus et une plage de variation du courant est de 50 A à 150 A, et
le circuit de réglage est configuré pour commuter la première condition de soudure et la deuxième condition de soudure selon un cycle d'une fréquence allant de 1 Hz à 5 Hz.
